# EUROPEAN PATENT APPLICATION

(11) **EP 4 769 263 A1**
(43) Date of publication of application: **01.07.2026**
(21) Application number: 24223874.9
(22) Date of filing: 31.12.2024
(51) Int. Cl.: G06Q 10/0631, G06N 3/044, G09B 5/00, G09B 5/02, G09B 5/08

(54) **COMPUTER-IMLEMENTED METHOD FOR RECOMMENDING CLASSES SCENARIOS AND A SYSTEM FOR RECOMMENDING CLASSES SCENARIOS**

(71) Applicant: Yellow House Education S.A., 30-394 Kraków (PL)
(72) Inventor: Miksa, Waldemar, 01-823 Warszawa (PL); Misztal, Krzysztof, 30-399 Kraków (PL)
(74) Representative: AOMB Polska Sp. z.o.o.

(57) **Abstract**

The present invention provides a distance pre-school learning platform, including bilingual learning, using artificial intelligence algorithms, that combines the functionality of automatic recommendation of classes templates with their thematic matching and teacher support in planning and implementation of educational activities. The platform according to the invention uses educational scenarios assigned to specific thematic circles. Thanks to the use of Al algorithms and a tagging system, the platform automatically recommends appropriate activities, adapted to the language level of children and the subject of classes. The invention provides a computer-implemented method for recommending classes scenarios based on attributes and keywords, using artificial intelligence algorithms, in which classes scenarios, attributes and keywords are previously recorded in a database. The method comprises the following steps: providing attributes describing classes scenarios, the attributes comprising thematic circles with topics assigned thereto, presented as a topic map in a graph form, operative verbs and nouns, and providing keywords for each scenario; entering a query to the neural network containing at least one attribute and at least one keyword; filtering the database by neural networks to obtain the recommended classes scenario most consistent with the said set of attributes and keywords. Artificial intelligence algorithms are implemented using hybrid neural structures. The invention also provides a system for recommending classes scenarios based on attributes and keywords, configured and programmed for the implementation of the described method, including: a database containing pre-recorded classes scenarios, attributes and keywords; a hybrid neural network for recommending a classes scenario; a server or user terminal.

## Description

### FIELD OF TECHNOLOGY

The present invention refers to a field of distance learning platforms, in particular distance pre-school learning platforms using artificial intelligence algorithms.

### PRIOR ART

In recent years, distance learning has grown in importance, especially in the context of pre-school education, which traditionally relies on direct interaction of children with teachers and peers. The COVID-19 pandemic and other situations requiring social isolation have highlighted the need to develop effective tools for distance learning, in particular for the youngest pupils whose education process is based on interactive and engaging forms of learning. Moreover, today's approach to pre-school education places increasing emphasis on developing children's language skills, including bilingualism, which plays a key role in their further education pathway. However, the introduction of universal bilingualism programmes in early childhood education poses a number of challenges, especially in the context of distance learning.

So far, distance learning solutions tend to rely on traditional e-learning platforms designed for older students or adults. Such systems typically offer the possibility to provide learning materials, conduct video lessons or evaluate students' progress. Such systems do not take into account the specific needs of pre-school children with a short concentration time. Distance learning systems for pre-school education therefore require short, dynamic and participatory activities, adapted to cognitive skills and children's interests.

Technical literature recognises solutions using artificial intelligence (Al) algorithms to personalise the learning process and educational content. Examples include systems for recommending teaching materials or applications supporting the planning of educational activities, or tools for creating a so-called "day plan". However, the existing systems do not take into account the specificities of bilingual learning.

For example, document US11087248B2 discloses a method of contextual recommendation of learning content on the basis of different parameters. The solution involves storing the learning content in a repository, generating a data model that defines contextual learner-related information, and calculating the utility value of the learning content using probabilistic reasoning. The usefulness of an educational object in relation to the role assigned to the learner depends on proficiency in the subject required by the task and the expected level of proficiency in using the educational content.

European patent application EP3545510A1, on the other hand, discloses a system for configuring and distributing educational content for students, teachers and administrators. The system includes mobile devices for students and teachers. Content from servers is distributed to mobile devices that can be accessed via logging. Content includes educational applications that provide interactive exposure to material, exercises and evaluations, and activity can be traced and configured by teachers and administrators. The solution may include an analysis module that tracks and analyses the use of content and may lead the student through the functionalities in the application, including through an adaptive and personalised manual using artificial intelligence. Educational content is divided into themes and delivered in different formats that can be searched for and divided into small fragments.

Known solutions rarely integrate functionalities in a comprehensive manner, enabling dynamic adaptation of learning content to the educational needs of pre-school children.

In the context of bilingual learning, methods based on linguistic immersion, i.e. the introduction of a foreign language naturally, through play, songs, games or daily activities, play a special role. However, known educational solutions seldom offer teachers tools allowing to plan and carry out bilingual courses effectively, especially remotely. Moreover, there are no systems that automatically recommend appropriate activities, adapted both to the subject of the classes and to children's language skills.

### BRIEF DESCRIPTION OF THE INVENTION

The essence of the invention is a computer-implemented method for recommending classes scenarios based on attributes and keywords, in which classes scenarios, attributes and keywords are previously recorded in a database, the method using artificial intelligence algorithms, comprising the following steps:
(a) providing attributes describing classes scenarios, the attributes comprising thematic circles with topics assigned thereto, presented as a topic map in a graph form, operative verbs and nouns, and providing keywords for each scenario;
(b) entering a query to the neural network containing at least one attribute and at least one keyword;
(c) filtering the database by neural networks to obtain the recommended classes scenario most consistent with the said set of attributes and keywords;
   wherein the said artificial intelligence algorithms are implemented using hybrid neural structures.

Preferably, the hybrid neural network is implemented using the Long Short-Term Memory, LSTM, network or the Gated Recurrent Unit, GRU, neural network.

Preferably, the hybrid neural network is based on the GPT-2 model.

Preferably, the neural network, when assessing the probability of matching a scenario to obtain the recommended classes scenario in step (c), also relies on user characteristics, preferably user characteristics such as age and level of knowledge.

Preferably, the neural network, when assessing the probability of matching a scenario in order to obtain the recommended classes scenario in step (c), also relies on environmental characteristics, preferably environmental characteristics such as teacher and group preferences.

Preferably, to obtain the recommended classes scenario, a recommendation model providing adaptive recommendation of content is used, comprising at least one module from among the following: time module, child age module, repetition module, knowledge module, scenario assessment module, user preferences module, group module, teacher module. Preferably, keywords are assigned using the following attributes: singular noun, plural noun, verb, adjective, preposition.

Preferably, artificial intelligence algorithms recommend scenarios covering topics not previously discovered by the graph.

Preferably, artificial intelligence algorithms recommend making repetitions based on the history of classes used by a given user.

Preferably, artificial intelligence algorithms recommend a classes schedule comprising at least two classes scenarios, based on a query and/or history of classes used by a given user.

Preferably, classes scenarios are divided into four categories, of which the first category includes content written in the user's native language and relating to topics concerning the user's country of residence, the second category includes content written in the user's native language and relating to topics concerning any country, the third category includes content written in the user's native language and in the second language, and the fourth category includes content written in the second language.

Preferably, the recommended classes scenario obtained in step (c) is presented to the user, preferably by providing its reference number.

Preferably, the recommended classes scenario obtained in step (c) is recorded in the database.

Preferably, the method in step (a) includes tagging of images in individual scenarios based on the CLIP (Contrastive Language-Image Pre-Training) model.

The invention also includes a system for recommending classes scenarios based on attributes and keywords, including:
(a) a database comprising pre-recorded classes scenarios, attributes and keywords;
(b) a hybrid neural network for recommending a classes scenario;
(c) a server or user terminal,
wherein the system is configured and programmed to carry out the method described above.

The optional and/or preferred features of each aspect of the disclosure set out herein also apply to any other aspects of the disclosure, where applicable.

### BRIEF DESCRIPTION OF THE DRAWINGS

The present invention will now be discussed, by way of example only, with reference to the attached drawings, in which:
Fig. 1 presents a scheme for adaptive content recommendation over time by the recommendation module;
Fig. 2 presents a diagram of the operation of the recommendation system;
Fig. 3 presents a diagram of the architecture of the neural network using LSTM, where Xᵢ are consecutive keywords entered by the teacher mapped to a given scenario;
Fig. 4 shows the architecture of the CLIP model.

### DETAILED DESCRIPTION OF THE INVENTION

The present invention fills the described prior art gaps by providing a distance pre-school learning platform using artificial intelligence algorithms that combines the functionality of automatic recommendation of classes formats with their thematic matching and teacher support in the planning and implementation of educational activities. The platform is designed in particular for the implementation of the universal bilingualism programme.

The platform according to the invention uses educational templates, i.e. educational scenarios, assigned to specific thematic circles, which support the teacher in planning classes in both languages. Thanks to the use of Al algorithms and a tagging system, the platform automatically recommends appropriate activities (in particular bilingual activities), adapted to the language level of children and the subject of classes, which significantly facilitates the educational programme in the remote environment. The platform therefore uses scenarios (also known as templates) as a tool to support the teacher's work in the form of proposals for planned activities. The templates refer to specific thematic circles and are assigned to a given topic. AI algorithms, supported by tags, recommend an appropriate template.

The technical effect of the present invention is to make it possible to minimise the amount of data necessary to master the topic to a certain minimum extent, to minimise the use of space on the data carrier, and to minimise the bandwidth consumption. The present invention allows to obtain an optimal learning path for a given child and to implement a curriculum with minimal effort of a teacher who, in selecting suitable themes and materials for classes, is supported by artificial intelligence algorithms.

As a first step, examples of thematic circles and corresponding templates for different topics will be described. The thematic circles, templates and topics presented are merely illustrative and are merely suggestions of possible content to be used. For the purposes of the invention, any other resources may be developed on the basis of which the artificial intelligence algorithms will select appropriate content.

Examples of resources have been developed with particular emphasis on the stage of children's development in key areas such as speech development, scientific, emotional and psychological development.

The following basic terms can be distinguished in the description of resources made available on the platform: thematic circles and topics, educational events and their description through templates.

The categories of educational events may be linked to classes provided by teachers in different pre-school education programmes. This is made possible by the development of these thematic circles, which are higher-level categories grouping sub-topics. The platform's suggestions for games, exercises, experiences for children etc. relate to these thematic circles.

Exemplary topic suggestions have been developed on the basis of an analysis of core curricula, programmes, primers and educational materials of many countries (Poland, Czech Republic, Slovakia, France, Germany, Holland, Sweden, Italy, Spain, Finland, Great Britain, Norway, Australia, New Zealand, Samoa Islands, Japan, Singapore, USA, Canada, South Africa, Egypt) The thematic circles and topics included therein are therefore representative of many education systems around the world.

The names of the thematic circles organise the topics that children meet during classes. Materials prepared on the platform have been ordered according to thematic circles.

In the embodiment, the resources propose 5 higher-level thematic circles divided into lower-level topics, organised in a structure that can be easily scaled with the addition of new content. The suggested thematic circles are: language and history; discovering the world; mathematics, logic, time; art; social and emotional life. Topics are assigned to each of the above thematic circles, and subjects of lessons are derived from thematic circles and topics.

The thematic circle "language and history" may include the following topics: written word, speech and language development, human history (further including, for example, historical figures). The thematic circle "discovering the world" may include the following topics: technology (including e.g. devices, transport, constructions), experimentation, man (including e.g. stages of human life, health, body), living organisms, landscape elements, climate, phenomena, weather, seasons, space. The thematic circles "mathematics, logic, time" may include the following topics: times of the day, day/week/month/year, time measurement (including e.g. calendar, clock), sequence of events, arithmetic, geometry, orientation in space, classification. The thematic circle "arts" may include the following topics: music (further including, for example, dance, musical instruments), handicraft, theatre. The thematic circle "social and emotional life" may include the following topics: leisure time, sport, work (further including e.g. professions, workplaces), celebration (further including e.g. holidays, special days), behaviours/values/relationships (further including e.g. habits, family, friends), emotions, national identity, cultural identity. The topics (concepts) proposed in the template make it possible to find new content for the child, who is ready to explore the topic further, enabling the child's further activity.

In pre-school education, the primary concept is an educational event - a situation developed by adults (sometimes involving children) to implement a pre-school education programme. The form of description of activities carried out in kindergarten and at home should be presented in a simple text containing all the necessary information, which is understandable to both teachers and home carers. In order to achieve this effect, the information has been aggregated into a formalised layout of fields referred to in this application as a template. Therefore, in the database, to describe the educational events, the concept of a "template" has been introduced , i.e. a set of information needed to complete an educational event. The educational event templates were prepared on the basis of thematic circles and topics associated therewith. Educational events include suggestions for exercises, plays, games, experiences or experiments to be carried out in a kindergarten group or individually (e.g. at home). The description of the educational event shall include information on the tools needed to carry out the given play or exercise in question. If the educational event concerns a play to be held outside the computer, e.g. with indicated music, such music shall be on the platform and shall be accessible.

Each description of the educational event indicates to the teacher or carer what tools to choose for the classes or what materials to prepare (e.g. crayons, cards, etc.). The description outlines the function of the learning event in the child's development and the possibility of interpreting the suggested activities to suit the children's expectations and developmental needs. The implementation of the educational events suggested leads to the achievement of the educational objectives covered by the core curriculum for pre-school education.

Summing up the above, the template comprises the proposal of planned activities, the so-called educational events, when working with a child or group of children.

Actions presented in the template may take place on the screen, e.g. with the aid of a tablet, computer or smartphone (assisted by a carer), or off screen, when working with children individually and in groups.

The templates (scenarios) refer to specific thematic circles (e.g. "discovering the world") and are assigned to a given topic (e.g. "space"). All activities (games, plays and other activities on and off the screen) presented in templates constitute a logical sequence of experiences within one or more selected topics. The recommendations suggested in the templates make it possible to design educational events tailored to the individual needs of each child.

The implementation time of the given subjects can be planned, for example, over a period of 1 to 5 days. For example, the five-day templates, which refer to the weekly plan, are thematically linked and follow the experiences of children consistently so that every user (i.e. child) can take advantage of their experience in a new situation on the following days. The template shall have an internal structure containing the necessary information to carry out classes with full awareness of the importance of educational events for the child's development.

The structure of the template includes the following elements.
1. Topics. Topics is a field of the template that indicates the thematic circle, the topics covered by the template and the subject of classes.
2. Immersion in the language. Immersion in a language is two fields in the template which show operative verbs, that is to say, the practical and intellectual activities which children undertake during classes, and nouns, that is to say, terms which develop in the mind of a child during classes. The terms are presented in native language and second language (e.g. English).
3. Off-screen educational events. Off-screen educational events is a field presenting a synthetic record of the essence of educational events in which children participate, divided into consecutive days and their subjects.
4. Description of off-screen educational events. This is a detailed description of educational events by day, including games, exercises for children divided into activities that occur during the day and short activity (e.g. to be performed before sleep) summarising the child's experiences of the day at home. The descriptions contain attachment numbers needed to implement educational events.
5. Information for the carer/play companion. This field provides a brief description of the significance of the educational events presented in the template for the child's development. This is information that makes people playing with children aware of or clarifies the development function of particular educational events. The field also provides brief advice on how to work with children.
6. Core curriculum. This field contains two categories of references of educational event content to the applicable pre-school education core curriculum. The first category is an indication of which kindergarten tasks will be accomplished when teachers/carers work using educational events from the templates. The second category of reference is an indication of what educational objectives a child can achieve when teachers/carers work with him/her on the basis of educational events from the templates.

Operative verbs, as mentioned above, define the practical and intellectual actions that children undertake during classes in specific activity areas. In the linguistic area of activity, operative verbs may be, e.g., the following: names, identifies, develops vocabulary, sorts, analyses, predicts, classifies. In the socio-emotional area of activity, operative verbs may be, e.g., the following: expresses emotions, develops habits. In the logical-mathematical activity area, operative verbs can be, e.g., the following: sorts, analyses, predicts, classifies, counts, calculates, compares, measures, constructs, investigates, designs. In the motor-sensory activity area, operative verbs can be, e.g., the following: dances, develops the sense of vision, develops the sense of taste, develops the sense of hearing, plays, imitates, sketches, draws, cuts out. In the artistic area of activity, operative verbs can be, e.g., the following: sketches, draws, cuts out, dances, builds, develops rhetorical skills, paints, sings. In the science area of activity, operative verbs can be, e.g., the following: experiments, measures, constructs, investigates, designs. These activity areas and operative verbs are obviously not limited to these examples. Another possible area of activity is e.g. social sciences. The topics that make up a given thematic circle may not only belong to one circle, as they are represented by concepts whose actual meaning changes as a result of functioning within a given thematic circle.

The templates, in the embodiment, are divided into four categories addressed to different categories of recipients (adults, i.e. teachers and carers, and participants of the bilingualism programme). The materials were therefore divided according to the type of clients using the resource base.

The first category (type 1) covers educational events representing content relating to the country of origin of the children. These are local content, specific to a given nation, written in the language of that nation (e.g. for Polish speakers - in Polish). Such content includes, for example, plays, exercises and experiences based on customs, rituals, legends, historical tales, as well as contemporary topics pertaining to a selected region. All events are located in specific thematic circles. For example, the first category may refer to Polish traditions and be written in Polish and be intended for all users. One possible example of activity within the first category is a research play that allows users (children) to discover the meaning of a particular word, e.g. the word clover.

Category two (type 2) covers educational events representing content related to supporting the development of children around the world. They do not contain regional or local content, but contain content that is repeated in children's education regardless of their country of origin (in different countries). All events are located in specific thematic circles. Type 2 resources are intended for all users in Poland and, once translated, for users in other countries. One possible example of an activity under category two is an exploratory play to discover how to draw a marten using your arm.

Category three (type 3) covers educational events representing content related to supporting children's development around the world, together with situations where children are immersed in a second language (bilingualism), for example English. Educational events are suggested, e.g., for pre-school teachers without specialised qualifications for second language learning. In an early bilingualism programme (e.g. with English), some classes may be taught by teachers who do not have the competence to teach a second (English) language, so materials for such learning are in category three. Materials in category three have a description in the native language - e.g. Polish.

Category four (type 4) covers educational events that represent content related to supporting children's development worldwide, together with situations where children are immersed in a second language, e.g. English. Educational events are suggested specifically for English teachers or pre-school teachers qualified to teach a second language, such as English. Materials are written in second language, e.g. English.

AI algorithms are supported by template tags (keywords), i.e. nouns referring to topics addressed in a given template. For example, for the template related to stars (in the thematic circle "discovering the world", topics: phenomena, weather) tags may be as follows: space, star, comet. For example, for the template related to dance (in the thematic circle "art", topics: music, dance), keywords may be the following: dance. For example, for the template related to nature (in the thematic circle "discovering the world", topics: living organisms), keywords may be the following: animals, plants, insects, care.

For specific topics, within different thematic circles, using keywords assigned to templates and on the basis of nouns and operative verbs, artificial intelligence (AI) algorithms recommend the appropriate template. Operative verbs refer to actions performed by children, while topics and nouns refer to the subject of the given classes.

Examples of queries for artificial intelligence algorithms, containing topics, nouns and operative verbs, may be as follows:
1. Topic: Nature
   Nouns: Rabbit
   Verbs: jumps, stops
2. Topic: Events
   Nouns: Birthday, gift, balloons
   Verbs: names, plays, sings
3. Topic: Places
   Nouns: Beach, sky, sand
   Verbs: names, describes, reacts
4. Topic: Communication
   Nouns: Train, panda, head
   Verbs: sings, repeats, names
5. Topic: Places
   Nouns: Beach, sand, sea
   Verbs: Describes, sings, names
6. Topic: Professions
   Nouns: Fireman, fire truck, hose
   Verbs: Sings, constructs, names
7. Topic: House - building
   Nouns: Palace, castle, ruins
   Verbs: Watches, marches, draws
8. Topic: Man
   Nouns: House, play, hi
   Verbs: Enumerates, repeats, names
9. Topic: Workplaces
   Nouns: Airport, captain, aircraft
   Verbs: Observes, talks, paints

Operative nouns may not necessarily be nouns, i.e. they may be, e.g., verbs (referring to the subject of the classes, as opposed to operative verbs), adjective pronouns, numerals, adjectives and adverbs, e.g.:
10. Topic: Human activity
   Nouns: Ball, to bounce (verb) - nouns
   Verbs: sings, changes, repeats - verbs
11. Topic: Human activity
   Nouns: car, my (adjective pronoun) - nouns
   Verbs: Points, participates - verbs
12. Topic: Human activity
   Nouns: One, two, three (numerals), one, two, three
   Verbs: Sings, counts, tells
13. Topic: Phenomena
   Nouns: Sun, yellow (adjective)
   Verbs: Sings, describes, points
14. Topic: Time
   Nouns: days of the week, today, tomorrow (adverbs)
   Verbs: names, listens, points.

Graphic and audio (music) files, graphic files, movie files, etc. may also be included as independent resources unrelated to educational events. Such files should be tagged, i.e. have keywords assigned thereto, so that the artificial intelligence algorithms can link them with queries to the database. These can include, e.g. picture cards, films, fairy tales, audio books, songs, background music, videos and recordings for learning pronunciation and vocabulary, worksheets, video recordings for learning words and phrases (contextual dictionary), files with song lyrics, instructional videos, photos, animated graphics.

Resource tagging, i.e. the assignment of keywords, is done, for example, with the following attributes: singular noun, plural noun, verb, adjective, preposition.

The present invention uses hybrid neural structures to analyse data and select appropriate templates based on queries. Hybrid neural structures combine different types of neural networks, each of which is responsible for a specific analytical functionality of the system. Such systems integrate features of deep neural networks (DNNs), recurrent neural networks (RNNs) and convolutional neural networks (CNNs) to process both text data and its semantic context.

In the first step, the neural network extracts features and transforms the keywords into vectors representing their meaning in semantic space. For this purpose, embedding techniques are used, for example generating vectors describing the meaning of words according to their context (Word2Vec) or making it possible to understand the context of words in a sentence, taking into account their surroundings in both directions (BERT, Bidirectional Encoder Representations from Transformers). The generated vectors are input data for subsequent layers of the network. The convolutional layer (CNN) analyses local patterns - it is used to identify local dependencies between keywords. CNN is particularly useful in detecting phrases or frequently associated sets of words which may indicate a particular theme. Convolutional filters capture characteristic patterns in word sequences. The recursive layer (RNN/LSTM/GRU) analyses the sequential context. To capture sequential dependencies and word order, the system uses recurrent neural networks (RNNs), such as:
LSTM (Long Short-Term Memory), which stores long-term dependencies, which is important when the context arises from previous keywords;
GRU (Gated Recurrent Unit), which acts like LSTM, but has a lower computational complexity.

The hybrid neural structures in the present invention are also based on the GPT-2 model, trained and modified accordingly for generating educational content.

CNN in the hybrid neural network may be used for image processing or local pattern analysis (e.g. in the analysis of images containing text) and GPT-2 may be used to generate descriptions based on text isolated from images. In a hybrid approach, LSTM can be used to process temporal data and GPT-2 can be used to generate responses or analyse text sequences in the context of these data. GPT-2 can analyse user preferences expressed in the text (e.g. opinions).

An attention mechanism assesses which keywords are most relevant in terms of theme selection. This allows the system to focus on the most important information and to ignore the less important elements.

After analysis of input data by hybrid layers, the system classifies the query by matching it to the themes in the database. For this purpose, for example, the dense layer transforms the output vector into a form understood by the classifier. Probabilities are then assigned to each potential theme and the most appropriate template is indicated (e.g. softmax function). The system searches for a suitable template, taking into account, e.g. thematic compatibility, level of difficulty and preferred language (in the case of the bilingualism programme).

It is also possible to personalise recommendations based on user history and preferences.

When a database is searched by artificial intelligence algorithms, in order to select an appropriate template and to establish a schedule of classes, the current material already processed by the class (group) shall be taken into account. Artificial intelligence algorithms also recommend subjects of lessons not previously discovered through the knowledge graph, as well as recommend repetitions and establish schedules (plans) of classes for a given period of time, taking into account the already processed material.

Artificial Intelligence models have also been used in the present invention to generate images for classes scenarios. The Neural Style Transfer (NST) model is a technique in the field of machine learning and deep learning that allows the style of one image (a reference image) to be transferred to the content of another image (e.g. a landscape photo). As part of this process, modified models based on Generative Adversarial Networks (GANs) were used. The GAN model consists of two key components: a generator and a discriminator. The generator is responsible for generating images, while the discriminator assesses whether a given image is real or generated. These two components learn together in a process in which the generator strives to generate images that are difficult to distinguish from real images, and the discriminator strives to get better and better at recognising false images. In the context of picture stylisation, the generator's task is to adapt the features of the input image to a particular artistic style. The process of imposing an image style using the GAN model involves several key steps. Initially, the model is trained on a data set that contains input images and corresponding images expected in a particular artistic style. During training, weights and parameters inside the generator are modified to minimise differences between the generated and expected images. After the training process, the model is ready to receive new input images and style them according to the remembered artistic style. The mechanism achieves realistic and artistic results that reflect the unique characteristics of the chosen style.

The system according to the invention may also include a recommendation model, the purpose of which is to propose scenarios to be implemented in classes, providing adaptive recommendation of content that allows to adapt over time to user (child) preferences. The recommendation model includes the following components:
1. Time module - this module takes into account the date on which the classes take place, i.e. based on the calendar date at the programming language level, the following is determined:
   a. Distance to "holidays" such as: Independence Day, first day of spring, etc.
   b. Distance from a given season of year
   In the time module, thematically linked scenarios before a given event are identified. The probability of identifying a particular scenario before a given event increases linearly and decreases exponentially after that event.
2. Child age module - this module is related to the degree of difficulty in realising a given scenario.
3. Repetition module - this module enables repetition of the material already covered. Scenarios that have already been covered are still available in the system, which makes it possible to repeat the material, which is especially beneficial when learning a foreign language.
4. Knowledge module - this module is related to thematic circles realised in the course of a child's education. This module ensures that knowledge is comprehensively acquired across different fields.
5. Scenario assessment module - this module analyses the assessments collected by the scenarios and identifies the most popular ones. It also allows new ones to be explored in such a way that children do not get bored and new scenarios are also introduced for use.
6. Child's preference module - this module allows the analysis and assessment of the child's activity in given classes, the assessment of the child's activity in past classes and the analysis of the links between classes, which is taken into account during the recommendation.
7. Group module - the group consists of children who do not necessarily attend classes from the very beginning, so the history of each child in the group is analysed and group preferences are determined on this basis.
8. Teacher module: every teacher has preferences, and teachers often return to the scenarios they prefer. Thus, the teacher module analyses the history of the scenarios realised by the teacher. In addition, the module ensures that the teacher, e.g., implements the same scenario in different groups and different educational establishments - so that the preparation for its implementation is not burdensome for the teacher.

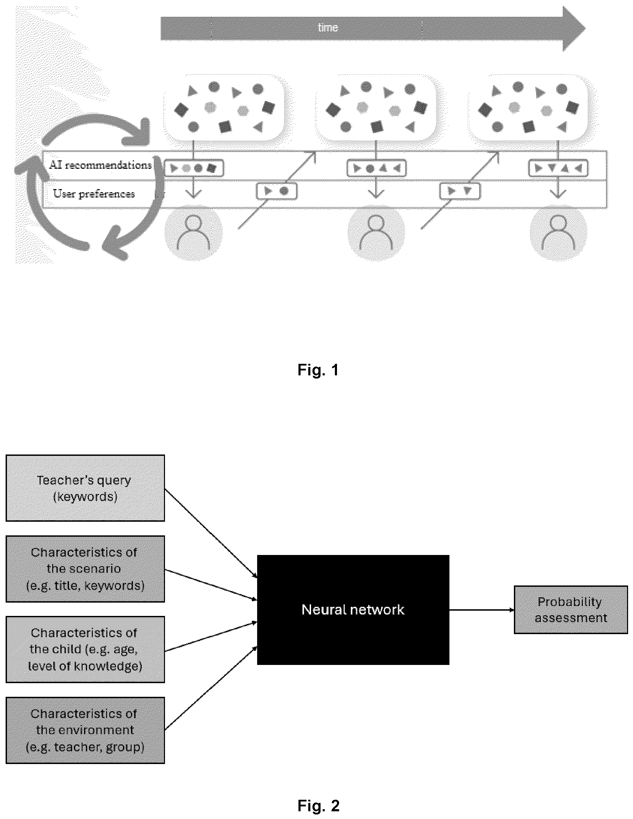

The combination of the above modules provides an adaptive recommendation of content that allows to adapt over time to the child's preferences, as illustrated in Fig. 1.

The recommendation system has been developed based on modifications of probability distributions introduced by the modules described above.

The recommendation system has also been developed on the basis of word embedding (e.g. word2vec) enabling the search for scenarios related to keywords entered by the teacher during the course of creating classes. The search takes into account, among others, the title of the scenario, the key words of the scenario, the key words of the resources (e.g. graphics, videos) assigned to the scenario.

The data thus collected is processed by a neural network which returns the probability, for each scenario found and configuration of modules, of whether a scenario should be used for the next classes.

A diagram of the operation of the recommendation system is presented in Fig. 2. As shown in Fig. 2, the neural network in the present invention, in order to assess the probability of matching a scenario, is based on the keywords entered in the teacher's query, the characteristics of the scenario available in the database (e.g. title, keywords), the characteristics of the child (e.g. age of the child, level of knowledge) and the characteristics of the environment (e.g. teacher and group preferences).

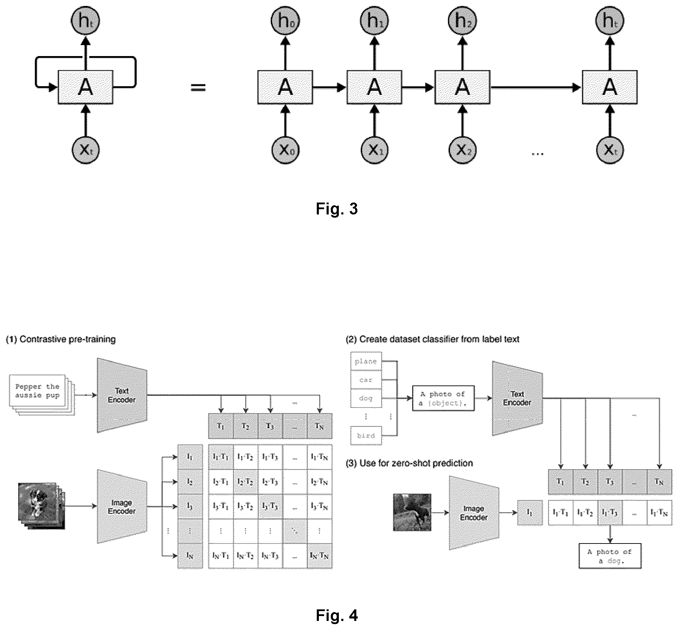

As a result of work on the architecture of the system, many neural network architectures were verified. Due to the need to process text, an architecture using LSTM is preferred. This makes it possible to treat the characteristics as a network bias, and the teacher's query and suggested scenarios as texts for classification - as shown in the diagram in Fig 3.

In Fig. 3, X stands for consecutive keywords inserted by the teacher mapped with a given scenario. At the output of the network (A) an assessment of a given scenario (h) is obtained.

The solution developed is therefore based on the use of multimodality in the description of the recommendation.

The developed recommendation module is used when creating new classes. The teacher can choose any scenario or select a scenario according to the system's suggestions. The system gathers direct feedback on the implementation of a given scenario in the group, which allows to discover the preferences of the group and of each child.

The tagging of pictures and images used in the developed system was based on the CLIP (Contrastive Language-Image Pre-Training) network modification. The CLIP model stands out as an advanced artificial intelligence tool capable of processing text and images simultaneously in an integrated manner. It is not only a tool for identifying objects or generating descriptions, but also a mechanism that can understand the context and the relations between given modalities. This unique ability opens up new prospects for artificial intelligence applications, where intermodal communication is a key aspect.

The CLIP model architecture is presented in Fig. 4. The CLIP model has an architecture that enables efficient processing of textual and visual information. It includes several key components that work together to achieve full integration between modalities. These are:
· text processing layer: this layer is responsible for text analysis, key features extraction and semantic representation, enabling the model to understand the meaning of words and phrases;
· image processing layer: responsible for analysing images, extracting visual features and building spatial representation;
· integration layer: a key element where text and image representations are combined. This is where the model builds a global understanding of the relations between modalities.

In the course of the project, a keyword dictionary was developed, as mentioned earlier in the description. These words have been selected in relation to the thematic circles being carried out in such a way as to ensure full thematic coverage. These words were then run through synonym dictionaries, thus reducing the size of the dictionary. In addition, an acceleration in tagging performance has been achieved through this. Then, for the tags given to the images in the training set, an analysis of the probabilities of the tags returned by CLIP was performed to estimate the threshold against which the decision is made that a given image is described with the indicated tag. Optimal threshold selection was performed using the f1-score measure.

Tagging based on keyword dictionary also ensures full configuration of tags within the project. If necessary, the addition or removal of tags is a simple operation.

The CLIP model was post-trained using images and their tags from the training set. This enabled the domain adaptation of the CLIP project towards better matching of tags and graphic styles.

Additional modifications were made to the CLIP model, including an extension of modality integration - in addition to the tags in the training set, new modalities were added related to the title of the considered scenario and the keywords assigned to the scenario. These modifications were introduced on an additive basis due to a sentence description model based on embedding. This allowed for increased efficiency in recognising context and relations between data.

Adaptive model training was used, which allowed the model to constantly adapt to new training data.

In the course of building and selecting the optimal architecture, assessments of the results made by humans were used on an ongoing basis. This mechanism was introduced by modifying the weight of a 'correct' or 'incorrect' response of the model, i.e. the 'correct' or 'incorrect' tag returned by the system. Weighed learning during adaptive training allowed high efficiency of the model to be achieved.

The performance of the resource-generating engine and platform under operating conditions has been validated. The effectiveness of the recommendation model was 95% on the test set.

Based on the available range of material, the artificial Intelligence model analysed the given notions and actions (operative verbs, keywords, nouns) in order to generate the most accurate recommendation of the template and its associated resources. The tests were carried out using calculations on an nVidia GTX 1650 graphics card with CUDA technology. The average response time of the hybrid neural structure was less than one second per user, while the average classes preparation time using materials from the platform was less than 2 seconds. Engine performance tests have shown that engine algorithms generate resources properly. The indication of good recommendations by artificial intelligence algorithms proves their effectiveness.

In some cases, artificial intelligence algorithms made recurring recommendations. The repetition of recommendations also indicates the effectiveness of Al, which seeks links between resources and queries entered. The repetition of recommendations indicates the essence of the thematic circle. The topics that make up a given thematic circle may not only belong to one circle, as they are represented by concepts whose actual meaning changes as a result of their functioning in a given circle (e.g. homonyms). Thus, the repeated recommendations demonstrate the correctness of AI's performance, which reflects the meaning for the learning child of the very topics which the child is learning as concepts belonging to various thematic circles. This overlapping of thematic circles leads to the formation of an integrated picture of the world in the mind of the child.

The platform can be supported by devices such as a smartphone, tablet or portable or desktop computer, by a dedicated mobile or web application.

An example of the implementation of a dedicated application for the operation and use of the platform according to the invention is described below.

The user's (child's) carer creates an account in the application, defining elements of their profile (name, surname, e-mail, home address, etc.). After registration, a link is sent to confirm and activate the account. Upon entering a link, the system recognises the email address as confirmed. Once confirmed, it is possible to log into the system where the carer has access to their data (first name, last name, email address, residence address, etc.).

The teacher also creates his/her account and profile in the application, in the same way as the carer. The teacher then defines the elements of the profile (first name, surname, declared competences, declaration of affiliation to a given establishment). The competences declared by the teacher can be available and edited in the profile, and can be selected from the list available in the application. The selected competences may be edited at any time. This may be a list of skills, qualifications or other information about the user's (teacher's) abilities.

In the application, the teacher creates a class he manages. Each class is assigned to a particular establishment, but more than one teacher may be assigned to one class. When creating a class, the teacher therefore provides the name of the class and the establishment to which it is assigned. The administrator of the establishment confirms that the teacher (with the relevant competences) belongs to that establishment and confirms that the class managed by the teacher belongs to that establishment. Preferably, each class already has an assigned establishment by default, to avoid loose groups (classes) unrelated to any establishment.

This establishment administrator also creates an account and profile in the system. When registering, the administrator is provided with a special registration link so that, once registered, he or she will be able to manage the establishment, i.e. confirm the teachers' affiliation to given establishment, for example.

The system administrator is able to create establishments and assign establishment administrators to them. The system administrator therefore provides the name of the establishment, the institution to which it belongs and its address.

The child's account is created by the carer (parent), after creating the carer's account. The carer creates the child's account with his/her name and chooses the establishment to which the child belongs (e.g. by school or class code). After confirming that the child belongs to the establishment, the carer may review the classes available in the establishment and send a request to join the child to a given class (group). A child's affiliation to a particular class is confirmed (or rejected) by the teacher.

The teacher generates a universal link for his/her class, which allows parents to be invited to create a child account that will automatically be assigned to the indicated group by means of the link.

The application also has an calendar option available. The carer is able to view a calendar with the child's classes. The teacher is able to view a calendar with his/her classes and the classes of the class he/she manages. Teacher is also able to add classes to the calendar, defining the date, time, class and template. The classes plan may be created by the teacher manually, by combining it from predefined classes from the database or manually entered classes. The generated classes plan can be downloaded in PDF format.

Details of a particular event (i.e. lesson) can be displayed together with information such as date, time, description, participants, etc. It is also possible to display a list of events for a particular month or other time period. The user (teacher) may view, download or add files to events. It is also possible to display participants assigned to a given event. The user (teacher) may consult the list of participants and their details.

Events (lessons) can be transmitted live, i.e. via the Internet, via the application in question. The user may participate in an online event and interact with other participants. A child who is a participant in an event is also able to assess the classes. In the case of a teacher, it is possible to display files assigned to given classes (events) and to display the content of an educational event.

Through the application, the child is able to view events and tasks related to the calendar. The child may view and manage his or her events.

The teacher can view the classes library and see the description of the classes. He or she can also view the history and classes plan for the group he or she manages (e.g. planned for the current school year), e.g. in a calendar view or as a list. The teacher can also filter the classes library by various criteria, such as thematic circles, topics, age group (younger, older), content type (by language, e.g. English, Polish-English, Polish). The teacher has access to the graphics, lesson content and audio/video files needed for the lesson. After classes, the teacher can assess the children within the group. The teacher is able to browse the available lesson scenarios without entering keywords or search for lesson scenarios for a specific group by entering at least one keyword. For this purpose, the keyword is used to filter scenarios. The teacher also has the option to configure a group lesson based on the selected scenario. The teacher can adapt the parameters of the lesson, such as date, time, subject, place, etc.

The teacher may also obtain, via Al algorithms, the recommendation of a template for a group, by providing a thematic circle, topic, keyword(s). A thematic circle may be selected from a list of thematic circles and a topic from a list of topics for a given thematic circle. Searching is also possible by keywords.

Uploading new educational material to the library and tagging (adding keywords) and classifying new educational material is carried out by the system administrator. When creating a new lesson scenario, it is possible to enter details of the scenario, such as subject, objectives, steps, etc. It is possible, e.g. to create a new step in a lesson scenario - it is possible to enter details of the step, such as content, tasks, materials, etc.

The child's carer/parent may display a list of classes for children on a given day (and time). As mentioned above, after completing the classes, the child has the option of assessing the classes via the carer's account.

Artificial intelligence, i.e. Al algorithms, acts as a creator of classes. On the basis of keywords, for specific topics, within different thematic circles and on the basis of operative nouns and verbs, the artificial intelligence (AI) algorithms recommend the appropriate template, which is a ready-made material to be used on the platform in order to conduct a lesson. The relevant templates, created for the platform, together with keywords, thematic circles and topics, as well as operative verbs, are available in a database from which artificial intelligence algorithms make a selection (recommendation). This library is built on the basis of collected material that can be developed freely, e.g. on the basis of a curriculum. Current material already processed by a given class (group) shall be taken into account when searching the database. Artificial intelligence algorithms also recommend subjects of lessons not previously discovered through the knowledge graph, and also recommend repetitions and draw up classes plans for a given period of time, e.g. for the next month. Classes templates may also be searched on the basis of age group data, provided that such information is available in the database. Recommended templates and classes plan containing templates may be printed.

Thus, the teacher is able to search, by entering one or more keywords, all available or recommended lesson scenarios for a particular group.

The application is equipped with a module for communication with the carer, i.e. a module presenting the child's progress in learning, presenting suggested repetitions to be made and enabling materials to be made available at home. The application may also be equipped with a module for creating individual classes, where it is possible to modify the template from the system to the individual needs of the child.

Based on collected and developed materials, the system using NST (Neural Style Transfer), or other machine-learning algorithms, may generate classes on a theme indicated by a verbal description, e.g. written in English.

A data tagging module, allowing automatic tagging of text and pictures, may be used to tag data in the database.

The Neural Style Transfer (NST) module can also be used to modify and adapt pictures according to the style of the project, i.e. with the desired style.

In addition, in order to prevent a child using the platform from accidentally accessing the caregiver's profile, switching from the child's account to the parent's account preferably involves entering a PIN code. The PIN code, e.g. the four-digit PIN code, is set by the carer after the carer's account has been created. The user (carer) must enter the correct PIN code to complete the session of the child and log in to the carer's account. Transferring the carer's account to the child's account may also be done using the PIN code (only the children of a given carer can be selected).

The teacher is also able to set the PIN code for their account. The PIN code may be required for authorisation for certain operations.

The system administrator and other authorised users (e.g. establishment administrator) are able to display a list of all institutions, schools (establishments), information about establishments, all groups of establishments included and to display groups from a particular establishment, as well as a list of teachers belonging to a particular school/institution and a list of students belonging to a particular school/institution. It is also possible to display statistics on a particular establishment or institution, such as the number of teacher logs per month and the number of active students.

## Claims

1. A computer-implemented method for recommending classes scenarios based on attributes and keywords, in which classes scenarios, attributes and keywords are previously recorded in a database, the method using artificial intelligence algorithms, comprising the following steps:
a) providing attributes describing classes scenarios, the attributes comprising thematic circles with topics assigned thereto, presented as a topic map in a graph form, operative verbs and nouns, and providing keywords for each scenario;
b) entering a query to the neural network containing at least one attribute and at least one keyword;
c) filtering the database by neural networks to obtain the recommended classes scenario most consistent with the said set of attributes and keywords;
wherein the said artificial intelligence algorithms are implemented using hybrid neural structures.

2. The method according to claim 1, **characterised in that** the hybrid neural network is implemented using the Long Short-Term Memory, LSTM, network or the Gated Recurrent Unit, GRU, neural network.

3. The method according to claim 1 or 2, **characterised in that** the hybrid neural network is based on the GPT-2 model.

4. The method according to claim 1 or 2, or 3, **characterised in that** the neural network, when assessing the probability of matching a scenario to obtain the recommended classes scenario in step (c), also relies on user characteristics, preferably user characteristics such as age and level of knowledge.

5. The method according to any of the preceding claims, **characterised in that** the neural network, when assessing the probability of matching a scenario in order to obtain the recommended classes scenario in step (c), also relies on environmental characteristics, preferably environmental characteristics such as teacher and group preferences.

6. The method according to any of the preceding claims, **characterised in that** to obtain the recommended classes scenario, a recommendation model providing adaptive recommendation of content is used, comprising at least one module from among the following: time module, child age module, repetition module, knowledge module, scenario assessment module, user preferences module, group module, teacher module.

7. The method according to any of the preceding claims, **characterised in that** keywords are assigned using the following attributes: singular noun, plural noun, verb, adjective, preposition.

8. The method according to any of the preceding claims, **characterised in that** artificial intelligence algorithms recommend scenarios covering topics not previously discovered by graph.

9. The method according to any of the preceding claims, **characterised in that** artificial intelligence algorithms recommend making repetitions based on the history of classes used by a given user.

10. The method according to any of the preceding claims, **characterised in that** artificial intelligence algorithms recommend a classes schedule comprising at least two classes scenarios, based on a query and/or history of classes used by a given user.

11. The method according to any of the preceding claims, **characterised in that** classes scenarios are divided into four categories, of which the first category includes content written in the user's native language and relating to topics concerning the user's country of residence, the second category includes content written in the user's native language and relating to topics concerning any country, the third category includes content written in the user's native language and in the second language, and the fourth category includes content written in the second language.

12. The method according to any of the preceding claims, **characterised in that** the recommended classes scenario obtained in step (c) is presented to the user, preferably by providing its reference number.

13. The method according to any of the preceding claims, **characterised in that** the recommended classes scenario obtained in step (c) is recorded in the database.

14. The method according to any of the preceding claims, **characterised in that** in step (a) it includes picture tagging in individual scenarios based on the CLIP model.

15. A system for recommending classes scenarios based on attributes and keywords, including:
a) a database comprising pre-recorded classes scenarios, attributes and keywords;
b) a hybrid neural network for recommending a classes scenario;
c) a server or user terminal,
wherein the system is configured and programmed to carry out the method according to any one of claims 1 to 14.
